# EUROPEAN PATENT APPLICATION

(11) **EP 3 569 423 A1**
(43) Date of publication of application: **20.11.2019**
(21) Application number: 17891221.8
(22) Date of filing: 21.12.2017
(51) Int. Cl.: B60C 5/01, B60C 9/22

(54) **TIRE**

(30) Priority: 11.01.2017 JP 2017002860
(71) Applicant: Bridgestone Corporation, Tokyo 104-8340 (JP)
(72) Inventor: FUKUSHIMA, Atsushi, Tokyo 104-8340 (JP); FUDEMOTO, Hiroyuki, Tokyo 104-8340 (JP); KON, Seiji, Tokyo 104-8340 (JP); MOTOORI, Osamu, Tokyo 104-8340 (JP)
(74) Representative: Oxley, Robin John George
(86) International application number: PCT/JP2017/046033
(87) International publication number: WO 2018/131423

(57) **Abstract**

A tire, including: an annular tire frame member; a belt ply disposed at an outer side of the tire frame member in a tire radial direction, the belt ply including a plurality of reinforcing cords and a coating resin that coats the reinforcing cords, and the belt ply having, at an outer surface of the belt ply in the tire radial direction, a groove along an extension direction of the reinforcing cords; and a rubber member disposed at the outer surface of the belt ply in the tire radial direction.

## Description

### Technical Field

The present invention relates to a tire.

### Background Art

Conventionally, pneumatic tires constructed from rubber, organic fiber materials, steel members, and the like have been used in vehicles such as passenger cars.

Further, in recent years, an investigation has been conducted to use resin materials, particularly thermoplastic resins and thermoplastic elastomers for the tire materials, in view of weight reduction, ease of molding, and easy recycling. For example, there has been proposed a tire in which an outer covering member such as a tread using rubber is attached to a tire frame member using a polyamide-based thermoplastic elastomer as a resin material (for example, see Japanese Patent Application Laid-Open (JP-A) No. 2012-46030).

### SUMMARY OF INVENTION

### Technical Problem

When a rubber member is disposed, in a tire radial direction, at an outer side of a belt ply that is disposed on a tire frame member, air may be incorporated in an interface between the belt ply and the rubber member.

Specifically, for example, in the case where a rubber member before vulcanization (hereinafter also referred to as an "unvulcanized rubber member") is wound around an outer side of a belt ply in a tire radial direction and then the resulting product is heated, air is incorporated in an interface with the belt ply in a step of winding the unvulcanized rubber member. In particular, a belt ply constituted by resin-coated cords in which reinforcing cords are coated with a coating resin has lower elasticity, as compared with the case where reinforcing cords are coated with a rubber material. This makes it difficult to wind an unvulcanized rubber member around, in a tire radial direction, an outer side of a belt ply constituted by resin-coated cords without incorporation of air. Further, in the case where an outer surface of a belt ply in a tire radial direction is flat, it is assumed that air is particularly easily incorporated due to a lack of an air escape route during winding an unvulcanized rubber member.

Further, if an unvulcanized rubber member is vulcanized by heating in a state where air is incorporated in an interface between a belt ply and the unvulcanized rubber member, the air incorporated in the interface is expanded and causes an adhesion failure in the interface between the belt ply and the rubber member, by which durability of the obtained tire is deteriorated.

Further, if the air remains in the interface between the belt ply and the rubber member in the tire obtained as a final product, peeling at the interface between the belt ply and the rubber member easily occurs due to, for example, expansion of air caused by heat during traveling, by which durability of the tire is deteriorated.

In consideration of the above circumstances, an object of the present disclosure is to provide a tire, including: a tire frame member; a belt ply including resin-coated cords; and a rubber member disposed at an outer surface of the belt ply in a tire radial direction, in which deterioration of durability due to incorporation of air in an interface between the belt ply and the rubber member is suppressed.

### Solution to Problem

<1> A tire, including:
   an annular tire frame member;
   a belt ply disposed at an outer side of the tire frame member in a tire radial direction, the belt ply including a plurality of reinforcing cords and a coating resin that coats the reinforcing cords, and the belt ply having, at an outer surface of the belt ply in the tire radial direction, a groove along an extension direction of the reinforcing cords; and
   a rubber member disposed at the outer surface of the belt ply in the tire radial direction. Advantageous Effects of Invention

According to the present disclosure, a tire is provided, the tire including: a tire frame member; a belt ply including resin-coated cords; and a rubber member disposed at an outer surface of the belt ply in a tire radial direction, in which deterioration of durability due to incorporation of air in an interface between the belt ply and the rubber member is suppressed.

### BRIEF DESCRIPTION OF DRAWINGS

Fig. 1 is a cross-sectional view taken along a tire width direction, which illustrates a configuration of a tire according to a first embodiment.
Fig. 2 is an enlarged schematic view illustrating a belt ply and its peripheral part shown in Fig. 1.
Fig. 3 is an enlarged schematic view illustrating a belt ply and its peripheral part in a tire according to another embodiment.
Fig. 4 is a cross-sectional perspective view illustrating a step of winding resin-coated cords around a tire case.
Fig. 5 is a cross-sectional view taken along a tire width direction, which illustrates a configuration of a tire according to a second embodiment.

### DESCRIPTION OF EMBODIMENTS

Hereinafter, embodiments of the present invention will be specifically described in detail. However, the present invention is not limited in any way to the following embodiments and can be performed with appropriate modifications within the scope of purport.

In the specification, a numerical range indicated using "from X to Y" refers to a range including numerical values X and Y as a minimum value and a maximum value, respectively.

In the specification, in the case where a composition contains a plurality of substances corresponding to each component, an amount of each component in the composition means, unless otherwise specified, a total amount of the plurality of substances present in the composition.

In the specification, the "resin" encompasses a thermoplastic resin, a thermoplastic elastomer, and a thermosetting resin, and does not encompass a vulcanized rubber. Further, in the following description of resins, the "same kind" means that resins have main chains containing common skeletons with each other, such as a combination of ester-based resins and a combination of styrene-based resins.

In the specification, the "thermoplastic resin" means a polymer compound that is softened as temperature rises and becomes relatively hard and strong when cooled, and that does not exhibit rubber-like elasticity.

In the specification, the "thermoplastic elastomer" means a copolymer that has a hard segment and a soft segment. Examples of the thermoplastic elastomer include a thermoplastic elastomer that is softened as temperature rises and becomes relatively hard and strong when cooled, and that exhibits rubber-like elasticity.

Note that examples of the "hard segment" described above include a segment having (i) a structure that contains a rigid group such as an aromatic group or an alicyclic group in the main skeleton or (ii) a structure that allows intermolecular packing via an intermolecular hydrogen bond or a π-π interaction. Further, examples of the "soft segment" include a segment having a structure that contains a long-chain group (for example, a long-chain alkylene group) in the main chain and has a high degree of freedom in molecular rotation and elasticity.

Further, in the specification, the "tire radial direction" refers to a direction that passes through a tire rotation axis and is orthogonal to a tire width direction. A farther side from the tire rotation axis along the tire radial direction is sometimes referred to as an "outer side in the tire radial direction" and a nearer side to the tire rotation axis along the tire width direction is sometimes referred to as an "inner side in the tire radial direction". Further, an outer surface in the tire radial direction is sometimes referred to as an "outer circumferential surface" and an inner surface in the tire radial direction is sometimes referred to as an "inner circumferential surface".

The "tire width direction" refers to a direction parallel to the tire rotation axis.

The "tire circumferential direction" refers to a direction in which the tire rotates with the rotation axis of the tire as the rotation center.

The "radial direction" refers to a direction orthogonal to the tire circumferential direction, including the tire radial direction and the tire width direction.

### (Tire)

A tire according to an embodiment includes: a tire frame member; a belt ply disposed at an outer side of the tire frame member in a tire radial direction; and a rubber member disposed at an outer circumferential surface of the belt ply. The belt ply includes a plurality of reinforcing cords and a coating resin that coats the reinforcing cords. Further, the belt ply has, at the outer circumferential surface thereof, a groove along an extension direction of the reinforcing cords.

The "groove" herein refers to a concave portion provided with the outer circumferential surface of the belt ply, in which a length of the groove in the extension direction of the reinforcing cords is larger than a width of the groove in the tire width direction, and a depth of the groove in the tire radial direction is smaller than a thickness of the belt ply.

The "length of the groove" refers to a length of the concave portion along the extension direction of the reinforcing cords.

The "width of the groove" refers to the width in a region (hereinafter also referred to as an "opening portion of the groove") where, in a cross section perpendicular to the extension direction of the reinforcing cords, the concave portion and a virtual outer circumferential surface in which the outer circumferential surface of the belt ply is assumed to be flat (i.e., free from any recessed portion) overlap each other.

The "depth of the groove" refers to a distance (specifically, a distance along the tire radial direction) between the opening portion of the groove and a bottom of the concave portion (i.e., a location farthest from the virtual outer circumferential surface, hereinafter also referred to as a "groove bottom") in the cross section perpendicular to the extension direction of the reinforcing cords.

Note that, regarding the "groove" described above, the groove may be entirely blocked or only the opening portion of the groove may be blocked, by a member (i.e., the rubber member) disposed at the outer circumferential surface of the belt ply.

The length of the groove is not particularly limited as long as it is larger than the width of the groove. The length of the groove is preferably equal to or larger than the length of the circumferential surface in the tire circumferential direction (hereinafter also referred to as a "circumferential length"), that is, a length which goes around the circumferential surface once in the tire circumferential direction. The groove is more preferably continuously extended in a length larger than the circumferential length.

The width of the groove is not particularly limited as long as it is smaller than the length of the groove. The width of the groove is preferably 200 µm or more, and more preferably 500 µm or more.

The depth of the groove is not particularly limited as long as it is smaller than the thickness of the belt ply. The depth of the groove is preferably 100 µm or more, and more preferably 300 µm or more.

The width of the groove and the depth of the groove can be measured by observing the cross section perpendicular to the extension direction of the reinforcing cords using, for example, a microscope (an optical microscope, model number: VHX-5000, manufactured by Keyence Corp.).

The tire includes the belt ply having the groove at the outer circumferential surface, by which deterioration of durability due to air incorporated in the interface between the belt ply and the rubber member can be suppressed.

Specifically, as described above, in particular, in the case where the outer circumferential surface of the belt ply is flat, it is difficult, for example, in a step of winding an unvulcanized rubber member around the outer circumferential surface of the belt ply, to wind the unvulcanized rubber member such that incorporation of air in the interface with the belt ply does not occur. Further, if the resulting product is heated in a state where air is incorporated between the belt ply and the unvulcanized rubber member, expansion of air causes an adhesion failure between the belt ply and the rubber member, as a result of which a tire with deteriorated durability is likely to be obtained. Further, when air remains in the interface between the belt ply and the rubber member in the tire, peeling easily occurs due to expansion of air caused by heat during traveling or the like, which results in deterioration of durability of the tire.

However, in the case where the belt ply has the groove at the outer circumferential surface, even if air is incorporated when the unvulcanized rubber member is wound around the outer circumferential surface of the belt ply, the groove at the outer circumferential surface of the belt ply serves as an escape route of air, by which air is easily removed through the groove. Specifically, for example, in the step of winding the unvulcanized rubber member around the outer circumferential surface of the belt ply, one end of the unvulcanized rubber member is brought into contact with the outer circumferential surface of the belt ply and then the unvulcanized rubber member is wound so as to gradually expand a contact surface while the tire frame member where the belt ply is disposed is rotated. Even if air is incorporated in this process, air is removed through the groove present at the outer circumferential surface of the belt ply if before the groove is blocked by the unvulcanized rubber member. Therefore, air hardly remains in the interface between the belt ply and the unvulcanized rubber member.

Further, even if air remains in the interface between the belt ply and the unvulcanized rubber member, the expanded air escapes into the groove disposed at the outer circumferential surface of the belt ply in the step of performing heating for vulcanization of the unvulcanized rubber member, as a result of which an adhesion failure between the belt ply and the rubber member due to expansion of air can be suppressed.

Further, even if air remains in the interface between the belt ply and the rubber member in the tire finally obtained, similar to above, the air expanded by heat during traveling or the like escapes into the groove disposed at the outer circumferential surface of the belt ply, as a result of which deterioration of durability due to air can be suppressed.

As described above, it is considered that deterioration of durability due to air incorporated in the interface between the belt ply and the rubber member can be suppressed in the tire including the belt ply having the groove at the outer circumferential surface thereof, as compared with a tire that does not have a groove.

Further, since the tire includes the belt ply that has the groove at the outer circumferential surface, dimensional stability of the tire can be improved.

Specifically, for example, in the case where the tire is obtained by disposing the unvulcanized rubber member on the belt ply followed by heating, the unvulcanized rubber member may be unevenly expanded, as a result of which the tire may have dimensional irregularities. In this regard, in the tire including the belt ply that has the groove at the outer circumferential surface, even if the unvulcanized rubber member is unevenly expanded by the heat during the production process, the expanded rubber enters the groove at the outer circumferential surface of the belt ply, thereby facilitating the dimensional stability of the tire as the whole.

### [First Embodiment]

Hereinafter, a first embodiment will be described with reference to the drawings. Note that an arrow W in the drawings indicates a direction parallel to the tire rotation axis (hereinafter, also referred to as a "tire width direction") and an arrow S indicates a direction that passes through the tire rotation axis and is orthogonal to the tire width direction (hereinafter, also referred to as a "tire radial direction"). Further, a single-dot chain line CL indicates a center line of the tire (hereinafter, also referred to as a "tire equatorial plain").

A structure of the tire according to the first embodiment will be described. Note that the first embodiment is configured such that a tire frame member includes a resin and a reinforcing cord is present along the tire circumferential direction.

In particular, the tire frame member including the resin has lower elasticity, as compared with a tire frame member including a rubber material. Thus, in the configuration in which the tire frame member includes the resin, air is easily incorporated in the process of providing the rubber member, thus the role of the groove at the outer circumferential surface of the belt ply becomes particularly important. Further, in the case where the tire frame member includes a crystallizable resin as a resin, since the crystallizable resin has air permeability lower than rubber, it becomes more difficult to remove air, thus the role of the groove at the outer circumferential surface of the belt ply becomes furthermore important.

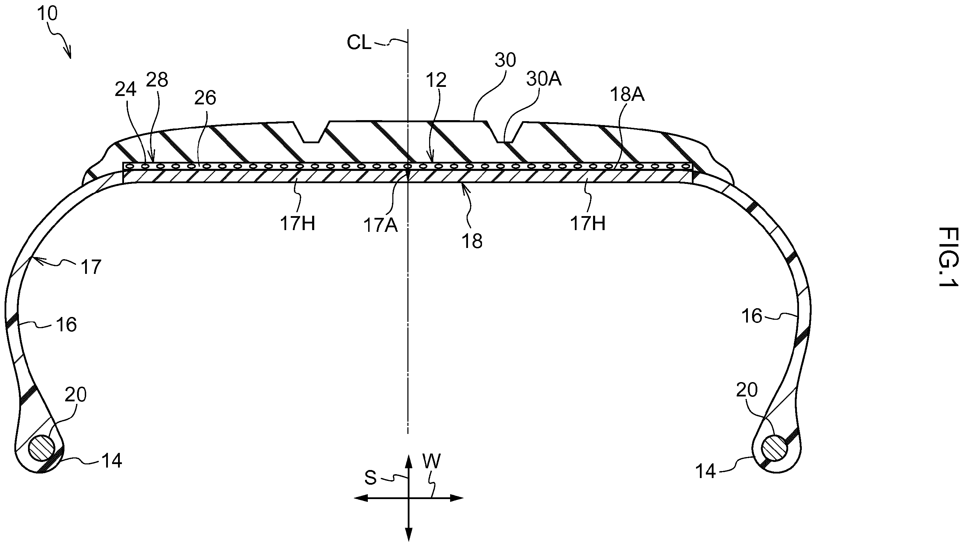

Fig. 1 is a cross-sectional view taken along the tire width direction (i.e., perpendicular to the extension direction of the reinforcing cords), which illustrates a configuration of the tire according to the first embodiment.

As shown in Fig. 1, a tire 10 according to the first embodiment includes a tire case 17 as an example of the annular tire frame member made of a resin material, a belt ply 12, and a tread 30 as an example of the rubber member. Further, the belt ply 12 includes a plurality of reinforcing cords 24 coated with a coating resin 26.

### (Tire Frame Member)

The tire case 17 may be a tire case for rubber tire including a carcass ply (not illustrated). However, the tire case 17 of the present embodiment is made of a thermoplastic elastomer as an example of the resin material for the tire frame member and is annularly formed in the tire circumferential direction. Note that details of the resin material used for the tire frame member will be described later.

The tire case 17 includes a pair of bead portions 14 disposed with an interval in the tire width direction, a pair of side portions 16 each extending from the pair of bead portions 14 to the outer side in the tire radial direction, and a crown portion 18 that connects the pair of side portions 16. The bead portion 14 is a portion that contacts a rim (not illustrated). Further, the side portion 16 forms a side part of the tire 10 and is gently curved so as to protrude toward the outer side in the tire width direction as it extends from the bead portion 14 to the crown portion 18.

The crown portion 18 is a portion that connects the outer end of one side portion 16 in the tire radial direction and the outer end of the other side portion 16 in tire radial direction, and supports the tread 30 disposed at the outer side in the tire radial direction.

Further, in the present embodiment, the crown portion 18 has a substantially uniform thickness. An outer circumferential surface 18A of the crown portion 18 in the tire case 17 may be, in the cross section in the tire width direction, flat or curved such that the outer circumferential surface 18A protrudes toward the outer side in the tire radial direction. Note that the outer circumferential surface 18A of the crown portion 18 of the present embodiment is an outer circumference of the tire case 17 where the belt ply 12 is disposed.

Further, the tire case 17 is formed by (i) forming a pair of annular tire half portions 17H each including one bead portion 14, one side portion 16, and the crown portion 18 with a half width, (ii) arranging the tire half portions 17H so as to face each other, (iii) and jointing the end portions of the crown portions 18 with a half width to each other at the tire equatorial plain CL. The end portions are jointed to each other using, for example, a resin material for welding 17A.

An annular bead core 20 extending along the tire circumferential direction is embedded in the bead portion 14. The bead core 20 is formed of a bead cord (not illustrated). The bead cord is formed of a metal cord such as a steel code, an organic fiber cord, a resin-coated organic fiber cord, a hard resin, or the like. Note that the bead core 20 may be omitted as long as the rigidity of the bead portion 14 can be sufficiently achieved.

Note that the tire case 17 may be formed as an integrally molded product or formed by separately producing three or more resin members and jointing them. For example, the tire case 17 may be formed by separately producing each portion (for example, the bead portion 14, the side portion 16, and the crown portion 18) and jointing them. In this case, a resin material that forms each portion of the tire case 17 (for example, the bead portion 14, the side portion 16, and the crown portion 18) may be different from each other.

Further, a reinforcing material (for example, fiber, cord, non-woven fabric, and woven fabric each made of a polymer material or metal) may be embedded in the tire case 17.

Further, a coating layer may be formed on a part of the surface of the bead portion 14 where the bead portion 14 is in contact with the rim (not illustrated), in order to enhance airtightness between the bead portion 14 and the rim. Examples of the material of the coating layer include a rubber material that is softer and has higher weather resistance than the tire case 17. The coating layer may be folded back from the inner surface of the bead portion 14 in the tire width direction to the outer side in the tire width direction, and extended, via the outer surface of the side portion 16, to the vicinity of the end portion of the outer side of the belt ply 12 in the tire width direction. Further, the extended end portion of the coating layer may be covered with the tread 30 described later. However, the coating layer may be omitted as long as sealability (airtightness) with the rim (not illustrated) can be achieved by the bead portion 14 in the tire case 17 alone.

### (Belt Ply)

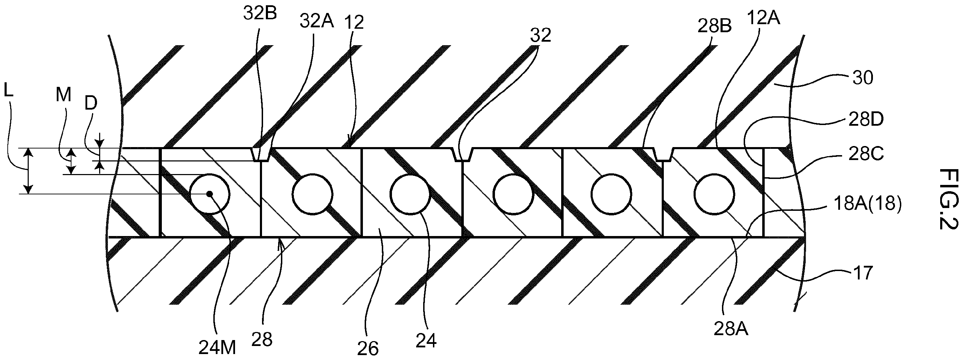

Next, the belt ply 12 will be described. Fig. 2 is an enlarged schematic view illustrating the belt ply 12 and its peripheral part shown in Fig. 1. As shown in Fig. 1 and Fig. 2, the belt ply 12 is disposed on the outer circumference of the tire case 17. The outer circumference of the tire case 17 of the present embodiment refers to the outer circumferential surface 18A of the crown portion 18.

The belt ply 12 is configured such that a resin-coated cord 28, which is helically wound around the outer circumference of the tire case 17 in the tire circumferential direction, is bonded to the tire case 17 and portions of the resin-coated cords 28 adjacent to each other in the tire width direction are jointed. Note that the resin-coated cord 28 is configured such that the reinforcing cord 24 is coated with the coating resin 26.

As shown in Fig. 2, the "portions of the resin-coated cords 28 adjacent to each other in the tire width direction" refer to a side surface 28C and a side surface 28D of the resin-coated cords 28 that are adjacent to each other in the tire width direction. The side surfaces 28C and 28D are faced to each other in the case where the resin-coated cord 28 is helically wound. That is, in the belt ply 12, the resins are continuously present in the tire width direction.

Further, an inner circumferential surface 28A of the resin-coated cord 28 in the tire radial direction is bonded to the outer circumferential surface 18A of the crown portion 18 in the tire case 17. Further, the tread 30 is bonded to an outer circumferential surface 28B of the resin-coated cord 28 in the tire radial direction.

Note that, in Fig. 1 and Fig. 2, the resin-coated cord 28 is directly disposed on the outer circumferential surface 18A of the crown portion 18 in the tire case 17. However, the resin-coated cord 28 may be disposed via another layer such as an adhesive layer.

The resin-coated cord 28 will be described below.

The reinforcing cord 24 is formed of a monofilament (single filament) of a metal fiber, an organic fiber, or the like, or a multifilament (stranded filament) in which such fibers are stranded. The coating resin 26 is formed of, for example, a thermoplastic elastomer. Note that details of the reinforcing cord 24 and the coating resin 26 will be described later.

Note that, in Fig. 2, the resin-coated cord 28 includes one reinforcing cord 24 in the coating resin 26. However, a plurality of the reinforcing cords 24 may be included in the coating resin 26. For example, the resin-coated cord 28 in which two reinforcing cords 24 are coated with the coating resin 26 may be used.

Further, in Fig. 2, the resin-coated cord 28 in which the reinforcing cord 24 is directly coated with the coating resin 26 is used. However, the present invention is not limited thereto. For example, a multilayer-coated cord in which the reinforcing cord 24 is coated, via another layer such as an adhesive layer, with the coating resin 26 may be used. Note that details of the adhesive layer will be described later.

A cross-sectional shape of the resin-coated cord 28 shown in Fig. 2 is a rectangle in which the inner circumferential surface 28A in the tire radial direction and the outer circumferential surface 28B in the tire radial direction are not deformed in the tire width direction. However, the present invention is not limited thereto. Examples of the cross-sectional shape of the resin-coated cord 28 include a shape in which the inner circumferential surface 28A in the tire radial direction and the outer circumferential surface 28B in the tire radial direction are deformed in the tire width direction (specifically, for example, a parallelogram in which each of the side surfaces 28C and 28D is inclined). Further, the cross-sectional shape of the resin-coated cord 28 may be a shape in which each of the side surfaces 28C and 28D has a curved surface, such as a circular arc shape or an S-shape, or may be a shape in which each of the side surfaces 28C and 28D have a step portion. In the case where the cross-sectional shape of the resin-coated cord 28 is a shape in which each of the side surfaces 28C and 28D is inclined or has a curved surface or a step portion, the contact area between the side surfaces 28C and 28D becomes larger as a result of which the bonding strength is increased, as compared with the case where the cross-sectional shape is a rectangle without having any deformation in the tire width direction.

Next, a groove 32 that is disposed at the belt ply 12 will be described.

The groove 32 is disposed at an outer circumferential surface 12A of the belt ply 12 along the extension direction of the reinforcing cord 24. As described above, the groove 32 is disposed at the outer circumferential surface 12A of the belt ply 12, as a result of which deterioration of durability due to air incorporated in the interface between the belt ply and the rubber member can be suppressed.

The groove 32 is not particularly limited as long as it is present along the extension direction of the reinforcing cord 24. However, as shown in Fig. 2, the groove 32 is preferably present at a portion of the outer circumferential surface 12A of the belt ply 12 corresponding to a portion between two reinforcing cords 24 adjacent to each other in the tire width direction. That is, an extension line from the groove 32 to the inner side in the tire radial direction preferably passes between two reinforcing cords 24 adjacent to each other in the tire width direction.

In this manner, a distance from the interface between the reinforcing cord 24 and the coating resin 26 to a groove bottom 32B becomes longer, as compared with the case where the groove 32 is present at a portion of the outer circumferential surface 12A of the belt ply 12 corresponding to a portion over the reinforcing cord 24. Thus, crack from the groove 32 hardly reaches the interface between the reinforcing cord 24 and the coating resin 26, as a result of which durability of the tire can be improved.

Note that the belt ply 12 shown in Fig. 1 and Fig. 2 is configured such that the layer of the resin-coated cords 28 is a single layer and the reinforcing cords 24 are disposed in one row in the tire width direction. However, the present invention is not limited thereto. The belt ply 12 may have a layered structure in which the resin-coated cord 28 is helically wound in the tire circumferential direction to form a layer and then the resin-coated cord 28 is further wound around the outer circumferential surface of the layer.

Note that in the case where the belt ply 12 has a layered structure, the expression "between two reinforcing cords 24 adjacent to each other in the tire width direction" described above refers to a portion between two reinforcing cords 24 included in the outermost layer of the layered structure in the tire radial direction.

Note that, in Fig. 2, the groove 32 is present at the interface between two resin-coated cords 28 adjacent to each other. However, the groove 32 may be present at a portion other than the interface.

The groove 32 shown in Fig. 2 has a cross-sectional shape in which a width of an opening portion 32A is larger than a width of the groove bottom 32B. This allows air to easily enter the groove 32 and facilitates the function of the groove 32 as an air escape route, as compared with the case where the width of the opening portion 32A is small. As a result, deterioration of durability due to air incorporated in the interface between the belt ply and the rubber member can be suppressed.

Note that the width of the opening portion 32A is preferably more than 1.0 fold of the width of the groove bottom 32B.

Further, in the case where the groove bottom 32B has no flat surface (for example, as described later, in the case where the groove bottom 32B has a curved surface or the cross-sectional shape of the groove 32 is a V-shape), the "width of the groove bottom 32B" refers to the width of the groove 32 at a position at which a distance from the groove bottom 32B toward the virtual outer circumferential surface is one fifth of the "depth of the groove 32".

In the cross-sectional shape of the groove 32 shown in Fig. 2, a depth D of the groove 32 is, as shown in Fig. 2, smaller than a distance L from the outer circumferential surface 12A of the belt ply 12 to a center portion 24M of the reinforcing cord 24 in the cross section. Thus, as compared with the case where the depth D of the groove 32 is larger than the distance L, a distance from the groove bottom 32B to the inner circumferential surface of the belt ply 12 becomes longer and crack from the groove 32 hardly reaches the inner circumferential surface of the belt ply 12, as a result of which durability of the tire can be improved.

Further, the depth D of the groove 32 is, as shown in Fig. 2, smaller than a distance M that represents the shortest distance from the outer circumferential surface 12A of the belt ply 12 to the reinforcing cord 24. Thus, similar to above, durability of the tire can be improved as compared with the case where the depth D of the groove 32 is larger than the distance M that represents the shortest distance described above.

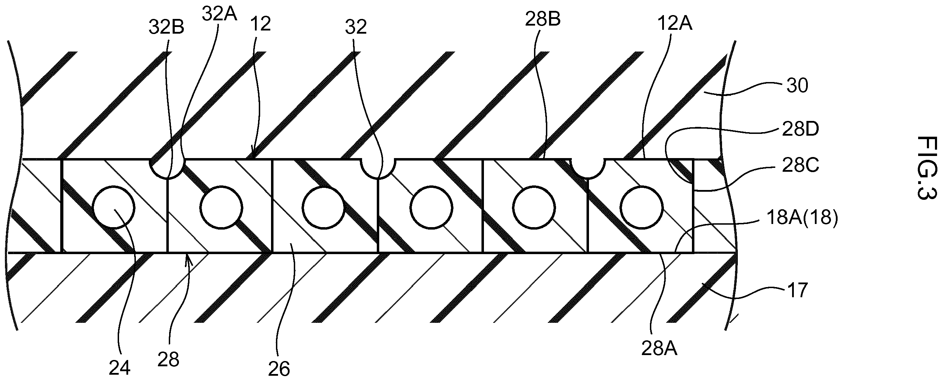

The cross-sectional shape of the groove 32 shown in Fig. 2 is a trapezoid in which the groove bottom 32B has corners. However, the present invention is not limited thereto. For example, as shown in Fig. 3, the cross-sectional shape of the groove 32 along the tire width direction is more preferably a shape in which the groove bottom 32B has no corner (for example, a circular arc shape) from the viewpoint of durability.

In the case where the groove bottom 32B has a shape without any corner, that is, the groove bottom 32B has a curved surface, crack from the corner of the groove bottom 32B hardly occurs, as a result of which durability of the tire can be improved.

Note that the length of the groove 32 in the extension direction of the reinforcing cord 24 is not particularly limited as long as it is longer than the width of the groove 32 in the tire width direction (the width of the opening portion 32A and the width of the groove bottom 32B). For example, the length of the groove 32 is ten folds or more of the width of the opening portion 32A, and the length of the groove 32 may be a length which goes around the tire once in the tire circumferential direction.

Further, the number of the grooves 32 in the tire width direction is not particularly limited. However, for example, the number of the grooves 32 is one third or more of the number of the reinforcing cords 24 in the tire width direction.

In the belt ply 12 shown in Fig. 1 and Fig. 2, the resin-coated cord 28 is helically wound in the tire circumferential direction. That is, the reinforcing cord 24 is helically wound in the tire circumferential direction, thus, the groove 32 along the extension direction of the reinforcing cord 24 is also disposed in the tire circumferential direction. In general, when a tread before vulcanization (a rubber member that will form the tread by vulcanization, that is, an unvulcanized rubber member) is disposed on the belt ply 12 in the process of producing the tire, the tread before vulcanization is wound in the tire circumferential direction. Thus, the groove 32 disposed in the tire circumferential direction can facilitate the removal of air incorporated in the interface between the belt ply 12 and the tread before vulcanization via the groove 32.

Note that an average distance between the reinforcing cords 24 adjacent to each other in the tire width direction in the belt ply 12 is, for example, from 400 µm to 3,200 µm, preferably from 600 µm to 2,200 µm, and more preferably from 800 µm to 1,500 µm. When the average distance between the reinforcing cords 24 adjacent to each other is 400 µm or more, an increase in the tire weight can be suppressed and better fuel economy tends to be achieved during traveling. When the average distance between the reinforcing cords 24 adjacent to each other is 3,200 µm or less, a sufficient tire reinforcement effect tends to be obtained.

Further, a thickness of the belt ply 12 is not particularly limited. However, the thickness of the belt ply 12 is, for example, in a range of from 0.2 mm to 1.2 mm. The thickness of the belt ply 12 is preferably in a range of from 0.3 mm to 1.0 mm and more preferably in a range of from 0.3 mm to 0.8 mm, from the viewpoint of durability of the tire.

Note that the belt ply 12 shown in Fig. 1 and Fig. 2 is configured such that the resin-coated cord 28 is helically wound around the outer circumferential surface of the tire case 17 and is bonded thereto. However, the present invention is not limited thereto. For example, the belt ply may be configured such that a plurality of reinforcing cords 24 and a coating resin 26 are integrated into a sheet form and the resultant is wound around the outer circumferential surface of the tire case 17.

### (Rubber Member)

Next, the tread 30 as an example of the rubber member will be described.

As shown in Fig. 1, the tread 30 is disposed at the outer side of the belt ply 12 in the tire radial direction. Note that the tread 30 is layered on the belt ply 12 that is located on the tire case 17, and is adhered thereto by vulcanization.

The tread 30 includes a rubber which is more excellent in wear resistance than the resin material forming the tire case 17, and the same kind of tread rubber used for conventional rubber-made pneumatic tires can be used.

Further, a groove 30A for water drainage that extends in the tire circumferential direction is formed on the outer circumferential surface of the tread 30 in the tire radial direction. In the present embodiment, two grooves 30A are formed. However, the present invention is not limited thereto, and even more grooves 30A may be formed. Further, as a tread pattern, a known tread pattern can be used.

Note that, in Fig. 1 and Fig. 2, the tread 30 is composed of the rubber member in a single layer. However, the present invention is not limited thereto, and, for example, the tread 30 may be composed of a rubber member in which a cushion rubber layer and a tread layer are layered.

### (Tire Production Method)

Next, a method of producing the tire 10 of the present embodiment will be described. First, a pair of the tire half parts 17H each including the bead core 20 is formed by injection molding using a thermoplastic material.

Next, the pair of the tire half parts 17H is made to face each other, and end portions of the parts that will be the crown portion 18 are abutted against each other. Then, the resin material for welding 17A in a molten state is applied to the abutted portion, to adhere the pair of the tire half parts 17H. In this manner, the annular tire case 17 is formed.

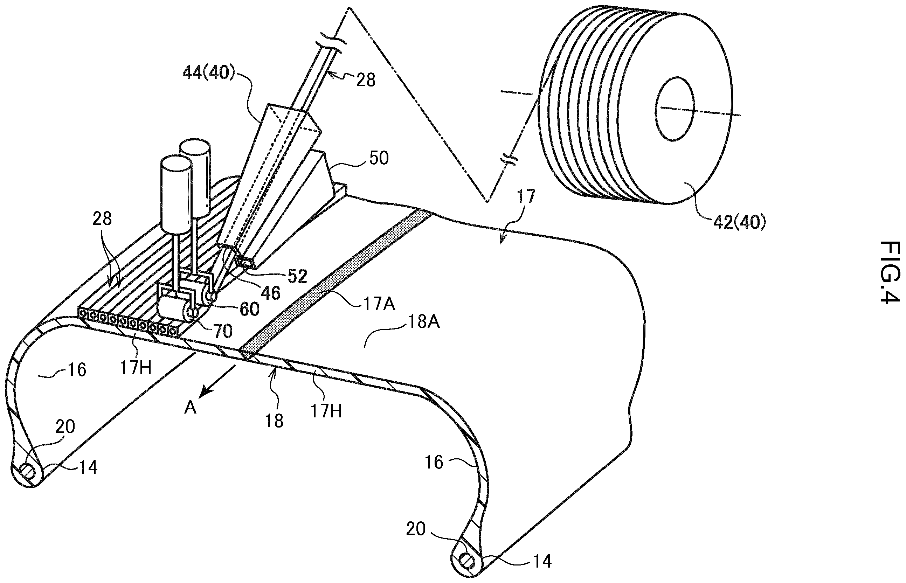

Next, a step of winding the resin-coated cord 28 around the outer circumference of the tire case 17 will be described. First, the tire case 17 is installed in a tire support device (not illustrated) that rotatably supports the tire case 17 and, as shown in Fig. 4, a cord supply device 40, a heating device 50, a pressing roller 60 as a presser, and a cooling roller 70 as a cooler are moved near the outer circumference of the tire case 17.

The cord supply device 40 is configured to have a reel 42 around which the resin-coated cord 28 is wound, and a guide member 44. The guide member 44 guides the resin-coated cord 28 that is unwound and fed out from the reel 42 to the outer circumference of the tire case 17 (the outer circumferential surface 18A of the crown portion 18). The guide member 44 has a cylindrical shape, and the resin-coated cord 28 is allowed to pass through the inside of the guide member 44. Further, the resin-coated cord 28 is sent out from a mouth portion 46 of the guide member 44 toward the outer circumferential surface 18A of the crown portion 18.

The heating device 50 is configured to blow hot air to the thermoplastic resin, causing the blown part to be heated and melted. The hot air is blown to the inner circumferential surface 28A of the resin-coated cord 28 pressed to the outer circumferential surface 18A of the crown portion 18, and a portion of the outer circumferential surface 18A of the crown portion 18 where the resin-coated cord 28 is disposed. Note that, in the case where the resin-coated cord 28 is wound around the outer circumferential surface 18A of the crown portion 18 once or more and the resin-coated cord 28 pressed to the outer circumferential surface 18A is already present, hot air is also blown to the side surface 28C of the existing resin-coated cord 28.

The heating device 50 is configured to blow off air heated by a heating wire (not illustrated) from a blow-off port 52 using air flow generated by a fan (not illustrated). Note that the configuration of the heating device 50 is not limited to the above configuration and the heating device 50 may have any configuration as long as the thermoplastic resin can be heated and melted. For example, a hot trowel may be brought into contact with a site to be melted and the contact portion may be heated and melted. Further, a site to be melted may be heated and melted by radiant heat or irradiation of infrared rays.

In Fig. 4, the cooling roller 70 is disposed at a downstream side of the pressing roller 60 in the rotation direction (an arrow A direction) of the tire case 17. The cooling roller 70 is configured to cool the resin-coated cord 28 and the crown portion 18 via the resin-coated cord 28, while pressing the resin-coated cord 28 to the outer circumference of the tire case 17 (the outer circumferential surface 18A of the crown portion 18). Further, similar to the pressing roller 60, the pressing force of the cooling roller 70 is adjustable and the roller surface of the cooling roller 70 has been subjected to a process for preventing adhesion of the resin material in a molten state. Further, similar to the pressing roller 60, the cooling roller 70 is freely rotatable and, in a state where the resin-coated cord 28 is pressed to the outer circumference of the tire case 17, the cooling roller 70 is configured to rotate following the rotation direction (an arrow A direction) of the tire case 17. Further, the cooling roller 70 is configured such that liquid (for example, water) is allowed to flow through the inside of the roller, which enables the resin-coated cord 28 in contact with the roller surface to be cooled by heat exchange with the liquid. Note that, in the case where the resin material in a molten state is naturally cooled, the cooling roller 70 may be omitted.

As shown in Fig. 4, when the resin-coated cord 28 is wound around the outer circumference of the tire case 17, the tire case 17 installed in the tire support device (not illustrated) is rotated in the arrow A direction, while the resin-coated cord 28 is sent out from the mouth portion 46 of the cord supply device 40 toward the outer circumferential surface 18A of the crown portion 18.

Further, while the inner circumferential surface 28A of the resin-coated cord 28 and the portion of the crown portion 18 where the resin-coated cord 28 is disposed are heated and melted by the hot air blown off from the blow-off port 52 of the heating device 50, the inner circumferential surface 28A of the resin-coated cord 28 is adhered to the melted portion of the crown portion 18. Then, the resin-coated cord 28 is pressed to the outer circumferential surface 18A of the crown portion 18 using the pressing roller 60. In this process, the side surfaces 28C and 28D of the resin-coated cord 28 adjacent to each other in the tire axial direction are also adhered to each other. Subsequently, the melted portion of the crown portion 18 and the melted portion of the resin-coated cord 28 are solidified as they are cooled via the resin-coated cord 28 by the cooling roller 70 brought into contact with the outer circumferential surface 28B of the resin-coated cord 28. In this manner, the resin-coated cord 28 is welded to the crown portion 18.

In this manner, the resin-coated cord 28 is helically wound around the outer circumferential surface 18A of the crown portion 18 in the tire circumferential direction, while being pressed to the outer circumferential surface 18A, by which a layer of the resin-coated cord 28 is formed on the outer circumference of the tire case 17, specifically, on the outer circumference of the crown portion 18. Note that, in order to helically wind the resin-coated cord 28, the position of the mouth portion 46 of the cord supply device 40 may be moved in the tire axial direction with the rotation of the tire case 17 or the tire case 17 may be moved in the tire axial direction.

Note that a tension of the resin-coated cord 28 may be adjusted by, for example, applying brake to the reel 42 of the cord supply device 40, or disposing a tension adjustment roller (not illustrated) or the like in the guiding path of the resin-coated cord 28. Adjustment of the tension enables the resin-coated cord 28 to be prevented from being meanderingly disposed.

Next, the groove 32 is formed on the outer circumferential surface of the layer of the resin-coated cord 28, thereby forming the belt ply 12.

Specifically, the tire case 17 on which the layer of the resin-coated cord 28 is formed is installed in the tire support device that rotatably supports the tire case 17, and the tire case 17 thus installed is rotated in the tire rotation axis direction. Then, the groove 32 along the extension direction of the reinforcing cord 24 is formed by grinding a part of the outer circumferential surface of the layer of the resin-coated cord 28 using a grinder while the tire case 17 is rotated, thereby obtaining the belt ply 12. Note that examples of the grinder include a cutter and a drill.

Note that the method of obtaining the belt ply 12 having the groove 32 at the outer circumferential surface 12A is not limited to the above method. Specifically, for example, the groove 32 along the extension direction of the reinforcing cord 24 may be formed in advance on the outer circumferential surface 28B of the resin-coated cord 28 in the tire radial direction (i.e., the surface constituting the outer circumferential surface 12A of the belt ply 12) before the resin-coated cord 28 is wound around the outer circumference of the tire case 17. Further, for example, a pit along the extension direction of the reinforcing cord 24 may be formed, for example, by chamfering a corner portion where the outer circumferential surface 28B of the resin-coated cord 28 in the tire radial direction is intersected with the side surface 28C of the resin-coated cord 28. The belt ply 12 having, at the outer circumferential surface 12A, the groove along the extension direction of the reinforcing cord 24can be formed by winding the resin-coated cord 28 in which the pit is formed on the outer circumference of the tire case 17.

Next, the tread before vulcanization is wound around the outer circumferential surface 12A of the belt ply 12 on which the groove 32 is formed. Specifically, for example, the belt-shaped tread before vulcanization is wound once, while the tire case 17 on which the belt ply 12 is disposed is rotated. In this process, air incorporated between the outer circumferential surface 12A of the belt ply 12 and the tread before vulcanization is removed via the groove 32.

Then, the tire case 17 on which the belt ply 12 and the tread before vulcanization are layered is vulcanized. Specifically, for example, the tread before vulcanization is vulcanized by heating the tire case 17 placed in a vulcanizer or a mold, to form the tread 30. The vulcanization temperature is, for example, from 180°C to 220°C and the vulcanization time is, for example, from 1 minute to 10 minutes.

Note that, in the tire shown in Fig. 1, the groove 30A is formed on the outer circumferential surface of the tread 30 in the tire radial direction. The tread before vulcanization at which the groove 30A is disposed in advance may be used, or the groove 30A may be formed after vulcanization.

In the manner described above, the tire 10 of the first embodiment can be obtained.

### (Resin Material Used for Tire Frame Member)

The resin material used for the tire frame member may include at least a resin, and may include another component such as an additive. However, a content of the resin in the resin material is preferably 50% by mass or more, and more preferably 90% by mass or more, with respect to a total amount of resin material. The tire frame member of the first embodiment can be formed using resin material.

Examples of the resin included in the tire frame member include a thermoplastic resin, a thermoplastic elastomer, and a thermosetting resin. The resin material preferably includes a thermoplastic elastomer and more preferably includes a polyamide-based thermoplastic elastomer, from the viewpoint of riding comfort during traveling.

Examples of the thermosetting resin include a phenolic thermosetting resin, a urea-based thermosetting resin, a melamine-based thermosetting resin, and an epoxy-based thermosetting resin.

Examples of the thermoplastic resin include a polyamide-based thermoplastic resin, a polyester-based thermoplastic resin, an olefin-based thermoplastic resin, a polyurethane-based thermoplastic resin, a vinyl chloride-based thermoplastic resin, and a polystyrene-based thermoplastic resin. These may be used singly, or in combination of two or more kinds thereof. Of these, the thermoplastic resin preferably includes at least one selected from a polyamide-based thermoplastic resin, a polyester-based thermoplastic resin, or an olefin-based thermoplastic resin, and more preferably includes at least one selected from a polyamide-based thermoplastic resin or an olefin-based thermoplastic resin.

Examples of the thermoplastic elastomer include a polyamide-based thermoplastic elastomer (TPA), a polystyrene-based thermoplastic elastomer (TPS), a polyurethane-based thermoplastic elastomer (TPU), an olefin-based thermoplastic elastomer (TPO), a polyester-based thermoplastic elastomer (TPEE), a crosslinked thermoplastic rubber (TPV), and other thermoplastic elastomer (TPZ), as defined in JIS K6418. Note that, for the resin material for forming the tire frame member, the thermoplastic resin is preferably used and the thermoplastic elastomer is more preferably used, in view of the elasticity required during traveling, the moldability during production, or the like. Further, in the case where the polyamide-based thermoplastic resin is used for a resin layer contained in a metal-resin composite, a polyamide-based thermoplastic elastomer is preferably used.

### -Polyamide-Based Thermoplastic Elastomer-

The polyamide-based thermoplastic elastomer means a thermoplastic resin material made of a copolymer having: a polymer forming a hard segment that is crystalline and has a high melting point; and a polymer forming a soft segment that is non-crystalline and has a low glass transition temperature, the thermoplastic resin material having an amide bond (-CONH-) in a main chain of the polymer forming the hard segment.

Examples of the polyamide-based thermoplastic elastomer include a material in which at least a polyamide forms a hard segment that is crystalline and has a high melting point, and another polymer (for example, a polyester and a polyether) forms a soft segment that is non-crystalline and has a low glass transition temperature. Further, the polyamide-based thermoplastic elastomer may be formed using, in addition to the hard segment and the soft segment, a chain extender such as a dicarboxylic acid.

Specific examples of the polyamide-based thermoplastic elastomer include the amide-based thermoplastic elastomer (TPA) as defined in JIS K6418: 2007, and the polyamide-based elastomer described in JP-A No. 2004-346273.

Examples of the polyamide forming the hard segment in the polyamide-based thermoplastic elastomer include a polyamide produced using a monomer represented by General Formula (1) or General Formula (2) below.

General Formula (1) H₂NR¹-COOH

In General Formula (1), R¹ represents a hydrocarbon molecular chain having 2 to 20 carbon atoms (for example, an alkylene group having 2 to 20 carbon atoms).

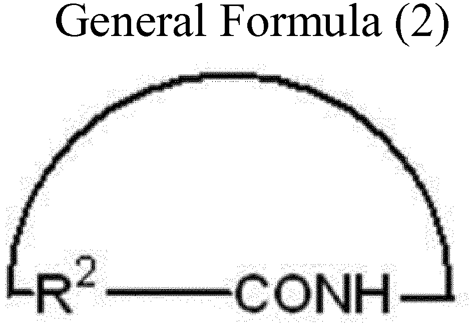

In General Formula (2), R² represents a hydrocarbon molecular chain having 3 to 20 carbon atoms (for example, an alkylene group having 3 to 20 carbon atoms).

In General Formula (1), R¹ is preferably a hydrocarbon molecular chain having 3 to 18 carbon atoms, for example, an alkylene group having 3 to 18 carbon atoms, more preferably a hydrocarbon molecular chain having 4 to 15 carbon atoms, for example, an alkylene group having 4 to 15 carbon atoms, and particularly preferably a hydrocarbon molecular chain having 10 to 15 carbon atom, for example, an alkylene group having 10 to 15 carbon atoms.

In General Formula (2), R² is preferably a hydrocarbon molecular chain having 3 to 18 carbon atoms, for example, an alkylene group having 3 to 18 carbon atoms, more preferably a hydrocarbon molecular chain having 4 to 15 carbon atoms, for example, an alkylene group having 4 to 15 carbon atoms, and particularly preferably a hydrocarbon molecular chain having 10 to 15 carbon atoms, for example, an alkylene group having 10 to 15 carbon atoms.

Examples of the monomer represented by General Formula (1) or General Formula (2) include an ω-aminocarboxylic acid or a lactam. Further, examples of the polyamide forming the hard segment include a polycondensate of a ω-aminocarboxylic acid or a lactam, and a copolycondensate of a diamine and a dicarboxylic acid.

Examples of the ω-aminocarboxylic acid include an aliphatic ω-aminocarboxylic acid having 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Further, examples of the lactam include an aliphatic lactam having 5 to 20 carbon atoms, such as lauryl lactam, ε-caprolactam, undecane lactam, co-enantholactam, and 2-pyrrolidone.

Examples of the diamine include an aliphatic diamine having 2 to 20 carbon atoms and an aromatic diamine having 6 to 20 carbon atoms. Examples of the aliphatic diamine having 2 to 20 carbon atoms and the aromatic diamine having 6 to 20 carbon atoms include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and meta-xylenediamine.

Further, the dicarboxylic acid may be expressed as HOOC-(R³)ₘ-COOH (R³: a hydrocarbon molecular chain having 3 to 20 carbon atoms, m: 0 or 1), and examples thereof include an aliphatic dicarboxylic acid having 2 to 20 carbon atoms, such as oxalic acid, succinic acid, glutaric acid, adipic acid, pimelic acid, suberic acid, azelaic acid, sebacic acid, and dodecanedioic acid.

A polyamide obtained by ring-opening polycondensation of lauryl lactam, ε-caprolactam, or undecane lactam can be preferably used for the polyamide forming the hard segment.

Further, examples of the polymer forming the soft segment include a polyester and a polyether, and specifically, polyethylene glycol, polypropylene glycol, polytetramethylene ether glycol, and an ABA-type triblock polyether. These may be used singly, or in combination of two or more kinds thereof. Further, for example, a polyetherdiamine that is obtained by reacting ammonia or the like with the terminal of a polyether may be used.

Here, the "ABA-type triblock polyether" means a polyether represented by General Formula (3) below.

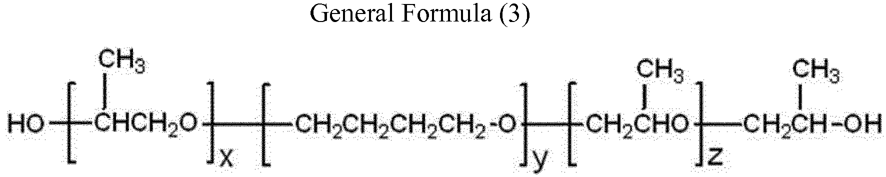

In General Formula (3), x and z each independently represent an integer of 1 to 20, and y represents an integer of 4 to 50.

In General Formula (3), x and z are each preferably an integer of 1 to 18, more preferably an integer of 1 to 16, still more preferably an integer of 1 to 14, and particularly preferably an integer of 1 to 12. Further, in General Formula (3), y is preferably an integer of 5 to 45, more preferably an integer of 6 to 40, still more preferably an integer of 7 to 35, and particularly preferably an integer of 8 to 30.

Examples of the combination of the hard segment and the soft segment include any combination of any of the hard segments and any of the soft segment described above. Of these, as the combination of the hard segment and the soft segment, a combination of a ring-opened polycondensate of lauryl lactam with polyethylene glycol, a combination of a ring-opened polycondensate of lauryl lactam with polypropylene glycol, a combination of a ring-opened polycondensate of lauryl lactam with poly(tetramethylene ether)glycol, and a combination of a ring-opened polycondensate of lauryl lactam with an ABA-type triblock polyether is preferable, and a combination of a ring-opened polycondensate of lauryl lactam with an ABA type triblock polyether is more preferable.

A number average molecular weight of the polymer (polyamide) forming the hard segment is preferably from 300 to 15,000 from the viewpoint of melt moldability. Further, the number average molecular weight of the polymer forming the soft segment is preferably from 200 to 6,000 from the viewpoints of toughness and low temperature flexibility. Further, a mass ratio (x:y) of the hard segment (x) relative to the soft segment (y) is preferably from 50:50 to 90:10 and more preferably from 50:50 to 80:20, from the viewpoint of moldability.

The polyamide-based thermoplastic elastomer can be synthesized by copolymerizing a polymer forming the hard segment and a polymer forming the soft segment, using a known method.

Examples of the polyamide-based thermoplastic elastomer that can be used include commercial products, such as "UBESTA XPA" series (for example, XPA9063X1, XPA9055X1, XPA9048X2, XPA9048X1, XPA9040X1, XPA9040X2, and XPA9044) available from UBE Industries, Ltd., and "VESTAMID" series (for example, E40-S3, E47-S1, E47-S3, E55-S1, E55-S3, EX9200, and E50-R2) available from Daicel-Evonik Ltd..

### -Polystyrene-Based Thermoplastic Elastomer-

Examples of the polystyrene-based thermoplastic elastomer include a material in which at least polystyrene forms the hard segment and another polymer (for example, polybutadiene, polyisoprene, polyethylene, hydrogenated polybutadiene, and hydrogenated polyisoprene) forms the soft segment that is non-crystalline and has a low glass transition temperature. As the polystyrene forming the hard segment, for example, polystyrene obtained using a known radical polymerization method or ionic polymerization method is preferably used, and specific examples thereof include polystyrene having an anionic living polymerization. Further, examples of the polymer forming the soft segment include polybutadiene, polyisoprene, and poly(2,3-dimethylbutadiene).

Examples of the combination of the hard segment and the soft segment include each any combination of any of the hard segment and any of the soft segment described above. Of these, as the combination of the hard segment and the soft segment, a combination of polystyrene with polybutadiene, or a combination of polystyrene with polyisoprene is preferable. Further, the soft segment is preferably hydrogenated in order to suppress an unintended crosslinking reaction of the thermoplastic elastomer.

A number average molecular weight of the polymer (polystyrene) forming the hard segment is preferably from 5,000 to 500,000, and more preferably from 10,000 to 200,000.

A number average molecular weight of the polymer forming the soft segment is preferably from 5,000 to 1,000,000, more preferably from 10,000 to 800,000, and still more preferably from 30,000 to 500,000. Further, a volume ratio (x:y) of the hard segment (x) relative to the soft segment (y) is preferably from 5:95 to 80:20 and more preferably from 10:90 to 70:30, from the viewpoint of moldability.

The polystyrene-based thermoplastic elastomer can be synthesized by copolymerizing a polymer forming the hard segment and a polymer forming the soft segment, using a known method.

Examples of the polystyrene-based thermoplastic elastomer include a styrene-butadiene-based copolymer [SBS (polystyrene-poly(butylene) block-polystyrene), SEBS (polystyrene-poly(ethylene/butylene) block-polystyrene)], a styrene-isoprene copolymer (polystyrene-polyisoprene block-polystyrene), a styrene-propylene-based copolymer [SEP (polystyrene-(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene/butylene) block)].

Examples of the polystyrene-based thermoplastic elastomer that can be used include commercial products, such as "TUFTEC" series (for example, H1031, H1041, H1043, H1051, H1052, H1053, H1062, H1082, H1141, H1221, and H1272) manufactured by Asahi Kasei Corp., and "SEBS" series (8007, 8076, etc.) and "SEPS" series (2002, 2063, etc.) manufactured by Kuraray Co., Ltd..

### -Polyurethane-Based Thermoplastic Elastomer-

Examples of the polyurethane-based thermoplastic elastomer include a material in which at least polyurethane forms a hard segment having a pseudo-crosslinked structure formed by physical aggregation and another polymer forms a soft segment that is non-crystalline and has a low glass transition temperature.

Specific examples of the polyurethane-based thermoplastic elastomer include the polyurethane-based thermoplastic elastomer (TPU) as defined in JIS K6418: 2007. The polyurethane-based thermoplastic elastomer can be represented as a copolymer including a soft segment containing a unit structure represented by Formula A below and a hard segment containing a unit structure represented by Formula B below.

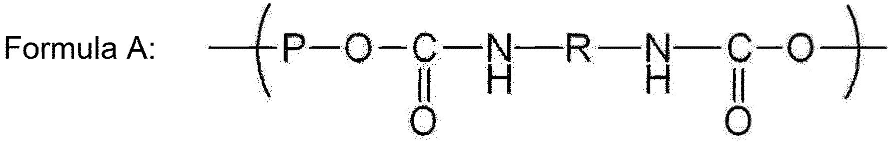

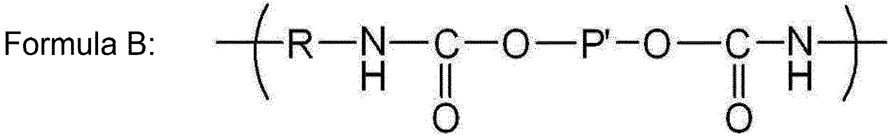

In Formulas above, P represents a long-chain aliphatic polyether or a long-chain aliphatic polyester; R represents an aliphatic hydrocarbon, an alicyclic hydrocarbon, or an aromatic hydrocarbon; and P' represents a short-chain aliphatic hydrocarbon, an alicyclic hydrocarbon, or an aromatic hydrocarbon.

Examples of the long-chain aliphatic polyether and the long-chain aliphatic polyester represented by P in Formula A that can be used include those having molecular weights of from 500 to 5,000. P is derived from a diol compound containing the long-chain aliphatic polyether or the long-chain aliphatic polyester represented by P. Examples of the diol compound include polyethylene glycol, polypropylene glycol, poly(tetramethylene ether)glycol, poly(butylene adipate) diol, poly-ε-caprolactone diol, poly(hexamethylene carbonate) diol, and an ABA-type triblock polyether, each of which has a molecular weight within the above range.

These may be used singly, or in combination of two or more kinds thereof.

In Formula A and Formula B, R is a partial structure derived from a diisocyanate compound containing an aliphatic hydrocarbon, an alicyclic hydrocarbon, or an aromatic hydrocarbon represented by R. Examples of an aliphatic diisocyanate compound containing the aliphatic hydrocarbon represented by R include 1,2-ethylene diisocyanate, 1,3-propylene diisocyanate, 1,4-butane diisocyanate, and 1,6-hexamethylene diisocyanate.

Further, examples of a diisocyanate compound containing the alicyclic hydrocarbon represented by R include 1,4-cyclohexane diisocyanate and 4,4-cyclohexane diisocyanate. Further, examples of an aromatic diisocyanate compound containing the aromatic hydrocarbon represented by R include 4,4'-diphenyl methane diisocyanate and tolylene diisocyanate.

These may be used singly, or in combination of two or more kinds thereof.

Examples of the short-chain aliphatic hydrocarbon, alicyclic hydrocarbon, or aromatic hydrocarbon represented by P' in Formula B that can be used include those having molecular weights of less than 500. Further, P' is derived from a diol compound containing the short-chain aliphatic hydrocarbon, the alicyclic hydrocarbon, or the aromatic hydrocarbon represented by P'. Examples of an aliphatic diol compound containing the short-chain aliphatic hydrocarbon represented by P' include glycols and polyalkylene glycols, such as ethylene glycol, propylene glycol, trimethylene glycol, 1,4-butanediol, 1,3-butanediol, 1,5-pentane diol, 1,6-hexane diol, 1,7-heptane diol, 1,8-octane diol, 1,9-nonane diol, and 1,10-decane diol.

Further, examples of an alicyclic diol compound containing the alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

Further, examples of an aromatic diol compound containing the aromatic hydrocarbon represented by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenyl methane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These may be used singly, or in combination of two or more kinds thereof.

A number average molecular weight of the polymer (polyurethane) forming the hard segment is preferably from 300 to 1,500, from the viewpoint of melt moldability. Further, a number average molecular weight of the polymer forming the soft segment is preferably from 500 to 20,000, more preferably from 500 to 5,000, and particularly preferably from 500 to 3,000, from the viewpoints of flexibility and thermal stability of the polyurethane-based thermoplastic elastomer. Further, a mass ratio (x:y) of the hard segment (x) relative to the soft segment (y) is preferably from 15:85 to 90:10 and more preferably from 30:70 to 90:10, from the viewpoint of moldability.

The polyurethane-based thermoplastic elastomer can be synthesized by copolymerizing a polymer forming the hard segment and a polymer forming the soft segment, using a known method. Examples of the polyurethane-based thermoplastic elastomer that can be used include the thermoplastic polyurethane described in Japanese Patent Application Laid-Open (JP-A) No. H05-331256.

Specifically, as the polyurethane-based thermoplastic elastomer, a combination of a hard segment formed of an aromatic diol and an aromatic diisocyanate with a soft segment formed of a polycarbonate ester is preferable, more specifically, at least one selected from a copolymer of tolylene diisocyanate (TDI) and polyester-based polyol, a copolymer of TDI and polyether-based polyol, a copolymer of TDI and caprolactone-based polyol, a copolymer of TDI and polycarbonate-based polyol, a copolymer of 4,4'-diphenylmethane diisocyanate (MDI) and polyester-based polyol, a copolymer of MDI and polyether-based polyol, a copolymer of MDI and caprolactone-based polyol, a copolymer of MDI and polycarbonate-based polyol, or a copolymer of MDI+hydroquinone and poly(hexamethylene carbonate) is preferable, and at least one selected from a copolymer of TDI and polyester-based polyol, a copolymer of TDI and polyether-based polyol, a copolymer of MDI and polyester polyol, a copolymer of MDI and polyether-based polyol, or a copolymer of MDI+hydroquinone and poly(hexamethylene carbonate) is more preferable.

Further, examples of the polyurethane-based thermoplastic elastomer that can be used include commercial products, such as "ELASTOLLAN" series (for example, ET680, ET880, ET690, and ET890) manufactured by BASF SE, "KURAMILON U" series (for example, 2000s, 3000s, 8000s, and 9000s) manufactured by Kuraray Co., Ltd., and "MIRACTRAN" series (for example, XN-2001, XN-2004, P390RSUP, P480RSUI, P26MRNAT, E490, E590, and P890) manufactured by Nippon Miractran Co., Ltd..

### -Olefin-Based Thermoplastic Elastomer-

Examples of the olefin-based thermoplastic elastomer include a material in which at least polyolefin forms a hard segment that is crystalline and has a high melting point, and another polymer (for example, polyolefins described above, another polyolefin, or a polyvinyl compound) forms a soft segment that is non-crystalline and has a low glass transition temperature. Examples of the polyolefin forming the hard segment include polyethylene, polypropylene, an isotactic polypropylene, and polybutene.

Examples of the olefin-based thermoplastic elastomer include an olefin-α-olefin random copolymer and an olefin block copolymer, such as a propylene block copolymer, a copolymer of ethylene and propylene, a copolymer of propylene and 1-hexene, a copolymer of propylene and 4-methyl-1-pentene, a copolymer of propylene and 1-butene, a copolymer of ethylene and 1-hexene, a copolymer of ethylene and 4-methylpentene, a copolymer of ethylene and 1-butene, a copolymer of 1-butene and 1-hexene, a copolymer of 1-butene and 4-methylpentene, a copolymer of ethylene and methacrylic acid, a copolymer of ethylene and methyl methacrylate, a copolymer of ethylene and ethyl methacrylate, a copolymer of ethylene and butyl methacrylate, a copolymer of ethylene and methyl acrylate, a copolymer of ethylene and ethyl acrylate, a copolymer of ethylene and butyl acrylate, a copolymer of propylene and methacrylic acid, a copolymer of propylene and methyl methacrylate, a copolymer of propylene and ethyl methacrylate, a copolymer of propylene and butyl methacrylate, a copolymer of propylene and methyl acrylate, a copolymer of propylene and ethyl acrylate, a copolymer of propylene and butyl acrylate, a copolymer of ethylene and vinyl acetate, and a copolymer of propylene and vinyl acetate.

Of these, as the olefin-based thermoplastic elastomer, at least one selected from a propylene block copolymer, a copolymer of ethylene and propylene, a copolymer of propylene and 1-hexene, a copolymer of propylene and 4-methyl-1-pentene, a copolymer of propylene and 1-butene, a copolymer of ethylene and 1-hexene, a copolymer of ethylene and 4-methylpentene, a copolymer of ethylene and 1-butene, a copolymer of ethylene and methacrylic acid, a copolymer of ethylene and methyl methacrylate, a copolymer of ethylene and ethyl methacrylate, a copolymer of ethylene and butyl methacrylate, a copolymer of ethylene and methyl acrylate, a copolymer of ethylene and ethyl acrylate, a copolymer of ethylene and butyl acrylate, a copolymer of propylene and methacrylic acid, a copolymer of propylene and methyl methacrylate, a copolymer of propylene and ethyl methacrylate, a copolymer of propylene and butyl methacrylate, a copolymer of propylene and methyl acrylate, a copolymer of propylene and ethyl acrylate, a copolymer of propylene and butyl acrylate, a copolymer of ethylene and vinyl acetate, or a copolymer of propylene and vinyl acetate is preferable, and at least one selected from a copolymer of ethylene and propylene, a copolymer of propylene and 1-butene, a copolymer of ethylene and 1-butene, a copolymer of ethylene and methyl methacrylate, a copolymer of ethylene and methyl acrylate, a copolymer of ethylene and ethyl acrylate, or a copolymer of ethylene and butyl acrylate is more preferable.

Further, a combination of two or more kinds of the olefin-based resins, such as ethylene and propylene, may be used. Further, a content ratio of olefin-based resin in the olefin-based thermoplastic elastomer is preferably from 50% by mass to 100% by mass.

A number average molecular weight of the olefin-based thermoplastic elastomer is preferably from 5,000 to 10,000,000. When the number average molecular weight of the olefin-based thermoplastic elastomer is in the range of from 5,000 to 10,000,000, the thermoplastic resin material has sufficient mechanical properties and excellent processability. From similar viewpoints, the number average molecular weight of the olefin-based thermoplastic elastomer is more preferably from 7,000 to 1,000,000, and particularly preferably from 10,000 to 1,000,000. In this manner, the mechanical properties and processability of the thermoplastic resin material can be further improved. Further, a number average molecular weight of the polymer forming the soft segment is preferably from 200 to 6,000, from the viewpoints of toughness and low temperature flexibility. Further, a mass ratio (x:y) of the hard segment (x) relative to the soft segment (y) is preferably from 50:50 to 95:15 and more preferably from 50:50 to 90:10, from the viewpoint of moldability.

The olefin-based thermoplastic elastomer can be synthesized by copolymerization using a known method.

Further, a product obtained by acid-modifying a thermoplastic elastomer may be used for the olefin-based thermoplastic elastomer.

The "product obtained by acid-modifying an olefin-based thermoplastic elastomer" means a product obtained by bonding an unsaturated compound having an acidic group, such as a carboxylic acid group, a sulfate group, or a phosphate group to an olefin-based thermoplastic elastomer.

Examples of the method of bonding the unsaturated compound having an acidic group, such as a carboxylic acid group, a sulfate group, or a phosphate group to an olefin-based thermoplastic elastomer includes a method of bonding (for example, by graft polymerization) an unsaturated bond site of an unsaturated carboxylic acid (generally, maleic anhydride) as the unsaturated compound having an acidic group, to an olefin-based thermoplastic elastomer.

As the unsaturated compound having an acidic group, an unsaturated compound having a carboxylic acid group, which has a weak acidity, is preferable from the viewpoint of suppressing deterioration of the olefin-based thermoplastic elastomer. Examples of the unsaturated compound having a carboxylic acid group include acrylic acid, methacrylic acid, itaconic acid, crotonic acid, isocrotonic acid, and maleic acid.

Examples of the olefin-based thermoplastic elastomer that can be used include commercial products, such as "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) manufactured by Mitsui Chemicals, Inc., "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C) and "ELVALOY AC" series (for example, 1125AC, 1209AC, 1218AC, 1609AC, 1820AC, 1913AC, 2112AC, 2116AC, 2615AC, 2715AC, 3117AC, 3427AC, and 3717AC) manufactured by Dupont-Mitsui Polychemicals Co., Ltd., "ACRYFT" series and "EVATATE" series available from Sumitomo Chemical Co., Ltd., "ULTRATHENE" series manufactured by Tosoh Corp., and "PRIME TPO" series (for example, E-2900H, F-3900H, E-2900, F-3900, J-5900, E-2910, F-3910, J-5910, E-2710, F-3710, J-5910, E-2740, F-3740, R110MP, R110E, T310E, and M142E) manufactured by Prime Polymer Co., Ltd..

### -Polyester-Based Thermoplastic Elastomer-

Examples of the polyester-based thermoplastic elastomer include a material in which at least polyester forms a hard segment that is crystalline and has a high melting point and another polymer (for example, polyester or polyether) forms a soft segment that is non-crystalline and has a low glass transition temperature.

An aromatic polyester can be used for the polyester forming the hard segment. The aromatic polyester can be obtained, for example, from an aliphatic diol and an aromatic dicarboxylic acid or an ester-forming derivative thereof. The aromatic polyester is preferably a polybutylene terephthalate derived from 1,4-butanediol and at least one of terephthalic acid or dimethyl terephthalate. Further, the aromatic polyester may be, for example, (A) a polyester derived from (A-1) a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof and (A-2) a diol having a molecular weight of 300 or less (for example, an aliphatic diol such as ethylene glycol, trimethylene glycol, pentamethylene glycol, hexamethylene glycol, neopentyl glycol, and decamethylene glycol; an alicyclic diol such as 1,4-cyclohexane dimethanol and tricyclodecane dimethylol; and an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, and 4,4'-dihydroxy-p-quaterphenyl), or (B) a copolymerization polyester of two or more kinds of the dicarboxylic acid components and the diol components described above. Further, it is possible to further copolymerize, in a range of 5 mol% or less, a multifunctional carboxylic acid component, a multifunctional oxyacid component, a multifunctional hydroxy component, or the like, each having three or more functional groups.

Examples of the polyester forming the hard segment include polyethylene terephthalate, polybutylene terephthalate, polymethylene terephthalate, polyethylene naphthalate, and polybutylene naphthalate, and polybutylene terephthalate is preferable.

Further, examples of the polymer forming the soft segment include an aliphatic polyester and an aliphatic polyether.

Examples of the aliphatic polyether include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide adduct polymer of poly(propylene oxide) glycol, and a copolymer of ethylene oxide and tetrahydrofuran.

Examples of the aliphatic polyester include poly(ε-caprolactone), polyenantholactone, polycaprylolactone, polybutylene adipate, and polyethylene adipate.

Of these aliphatic polyethers and aliphatic polyesters, poly(tetramethylene oxide) glycol, an ethylene oxide adduct of poly(propylene oxide) glycol, poly(ε-caprolactone), polybutylene adipate, polyethylene adipate, or the like is preferable as the polymer forming the soft segment, from the viewpoint of elastic characteristics of the obtained polyester block copolymer.

Further, a number average molecular weight of the polymer forming the soft segment is preferably from 300 to 6,000 from the viewpoints of toughness and low temperature flexibility. Further, a mass ratio (x:y) of the hard segment (x) relative to the soft segment (y) is preferably from 99:1 to 20:80 and more preferably from 98:2 to 30:70, from the viewpoint of moldability.

Examples of a combination of the hard segment and the soft segment include each any combination of any of the hard segment and any of the soft segment described above. Of these, as the combination of the hard segment and the soft segment, a combination of poly(butylene terephthalate) as the hard segment and an aliphatic polyether as the soft segment is preferable, and a combination of poly(butylene terephthalate) as the hard segment and poly(ethylene oxide) glycol as the soft segment is more preferable.

Examples of the polyester-based thermoplastic elastomer that can be used include commercial products, such as "HYTREL" series (for example, 3046, 5557, 6347, 4047, and 4767) manufactured by Du Pont-Toray Co., Ltd. and "PELPRENE" series (for example, P30B, P40B, P40H, P55B, P70B, P150B, P280B, P450B, P150M, S1001, S2001, S5001, S6001, and S9001) manufactured by Toyobo Co., Ltd..

The polyester-based thermoplastic elastomer can be synthesized by copolymerizing the polymer forming the hard segment and the polymer forming the soft segment, using a known method.

### -Other Components-

The resin material may optionally contain other components other than the resin. Examples of other components include rubber, various fillers (for example, silica, calcium carbonate, and clay), anti-aging agents, oils, plasticizers, colorants, weather resistant agents, and a reinforcing materials.

### (Reinforcing Cord)

Examples of the reinforcing cord 24 include a monofilament (single filament) of a single metal cord and a multifilament (stranded filament) in which a plurality of metal cords are stranded. From the viewpoint of further improving durability of the tire, a multifilament is preferable. The number of the plurality of metal cords is, for example, from 2 to 10, and preferably from 5 to 9.

From the viewpoint of satisfying both internal pressure resistance and weight reduction of the tire, a thickness of the reinforcing cord 24 is preferably from 0.2 mm to 2 mm, and more preferably from 0.8 mm to 1.6 mm. The thickness of the metal member is defined as a number-average value of the thickness measured at five points that are randomly selected. The thickness of the metal member can be determined by the method described above.

### (Coating Resin)

Material of the coating resin 26 is not particularly limited as long as it contains a resin. For example, at least one of thermoplastic materials selected from the group consisting of thermoplastic resins and thermoplastic elastomers can be used for the material of the coating resin 26.

The coating resin 26 desirably contains a thermoplastic elastomer from the viewpoints of easy moldability and adhesiveness to an adhesive layer.

In particular, it is desired that the resin contained in the tire case 17 and the resin contained in the coating resin 26 are materials of the same kind, from the viewpoint of adhesiveness between the coating resin 26 and the tire case 17. For example, in the case where a polyamide-based thermoplastic resin is used for the resin contained in the coating resin 26, it is preferable to use, for the resin contained in the tire case 17, at least one of polyamide-based thermoplastic resins or polyamide-based thermoplastic elastomers.

Examples of the thermoplastic resin include the same kind of thermoplastic resin used for the tire case 17 described above. Specific examples of the thermoplastic resin include a polyamide-based thermoplastic resin, a polyester-based thermoplastic resin, an olefin-based thermoplastic resin, a polyurethane-based thermoplastic resin, a vinyl chloride-based thermoplastic resin, and a polystyrene-based thermoplastic resin. These may be used singly, or in combination of two or more kinds thereof. Of these, as the thermoplastic resin, at least one selected from a polyamide-based thermoplastic resin, a polyester-based thermoplastic resin, or an olefin-based thermoplastic resin is preferable.

### -Polyamide-Based Thermoplastic Resin-

Examples of the polyamide-based thermoplastic resin include a polyamide forming the hard segment of the polyamide-based thermoplastic elastomer described above. Specific examples of the polyamide-based thermoplastic resin include: a polyamide (Amide 6) obtained by ring-opening polycondensation of ε-caprolactam; a polyamide (Amide 11) obtained by ring-opening polycondensation of undecane lactam; a polyamide (Amide 12) obtained by ring-opening polycondensation of lauryl lactam; a polyamide (Amide 66) obtained by polycondensation of a diamine and a dibasic acid; and a polyamide (Amide MX) containing meta-xylene diamine as a structural unit.

Amide 6 can be represented, for example, by {CO-(CH₂)₅-NH}ₙ. Amide 11 can be represented, for example, by {CO-(CH₂)₁₀-NH}ₙ. Amide 12 can be represented, for example, by {CO-(CH₂)₁₁-NH}ₙ. Amide 66 can be represented, for example, by {CO(CH₂)₄CONH(CH₂)₆NH}ₙ. Amide MX can be represented, for example, by Structural Formula (A-1) below. In this Formula, n represents the number of recurring units.

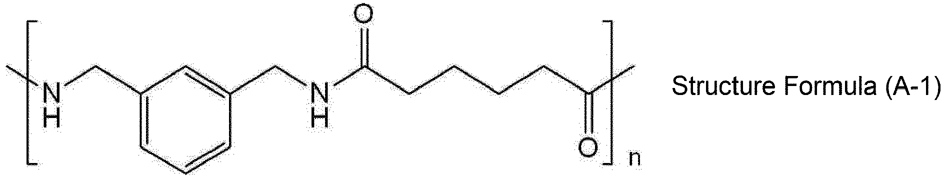

### -Polyester-Based Thermoplastic Resin-

Examples of the polyester-based thermoplastic resin include a polyester forming the hard segment of the polyester-based thermoplastic elastomer described above.

Specific examples of the polyester-based thermoplastic resin include: an aliphatic polyester such as polylactic acid, polyhydroxy-3-butyl butyrate, polyhydroxy-3-hexyl butyrate, poly(ε-caprolactone), polyenantholactone, polycaprylolactone, polybutylene adipate, and polyethylene adipate; and an aromatic polyester such as polyethylene terephthalate, polybutylene terephthalate, polyethylene naphthalate, and polybutylene naphthalate. Of these, polybutylene terephthalate is preferable as the polyester-based thermoplastic resin from the viewpoints of heat resistance and processability.

### -Olefin-Based Thermoplastic Resin-

Examples of the olefin-based thermoplastic resin include a polyolefin forming the hard segment of the olefin-based thermoplastic elastomer described above.

Specific examples of the olefin-based thermoplastic resin include a polyethylene-based thermoplastic resin, a polypropylene-based thermoplastic resin, and a polybutadiene-based thermoplastic resin. Of these, a polypropylene-based thermoplastic resin is preferable as the olefin-based thermoplastic resin from the viewpoints of heat resistance and processability.

Specific examples of the polypropylene-based thermoplastic resin include a propylene homopolymer, a random copolymer of propylene and α-olefin, and a block copolymer of propylene and α-olefin. Examples of the α-olefin include an α-olefin having about 3 to about 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

### -Thermoplastic Elastomer-

Examples of the thermoplastic elastomer include a thermoplastic elastomer which is the same kind as that used for the tire case 17 described above.

The coating resin 26 may contain other components other than the resin. Examples of other components include rubber, elastomers, thermoplastic resins, various fillers (for example, silica, calcium carbonate, and clay), anti-aging agents, oils, plasticizers, colorants, and weather resistant agents.

Note that resin contained in the coating resin 26 is preferably 50% by mass or more, more preferably 80% by mass or more, and still more preferably 90% by mass or more.

Further, an average thickness of the coating resin 26 is not particularly limited. However, the average thickness of the coating resin 26 is preferably from 10 µm to 1,000 µm, and more preferably from 50 µm to 700 µm, from the viewpoints of excellent durability and weldability.

### (Adhesive Layer)

The adhesive layer is formed, for example, using an adhesive.

Examples of the adhesive used for forming the adhesive layer include a hot-melt adhesive and a solvent-based adhesive. The adhesive used for forming the adhesive layer may be used singly, or in combination of two or more kinds thereof.

In the case where the adhesive used for forming the adhesive layer is a non-reactive adhesive, the adhesive layer is a layer containing the non-reactive adhesive. In the case where the adhesive used for forming the adhesive layer is a reactive adhesive, the adhesive layer is a layer containing a reaction product of the reactive adhesive.

Examples of the hot-melt adhesive include an adhesive that contains, as a main component (main ingredient), at least one thermoplastic resin selected from a modified olefin-based resin (a modified polyethylene-based resin, a modified polypropylene-based resin, etc.), a polyamide-based resin, a polyurethane-based resin, a polyester-based resin, a modified polyester-based resin, a copolymer of ethylene and ethyl acrylate, or a copolymer of ethylene and vinyl acetate. Of these, from the viewpoint of the adhesiveness between the metal member and the resin layer, the hot-melt adhesive containing at least one selected from the group consisting of a modified olefin-based resin, a polyester-based resin, a modified polyester-based resin, a copolymer of ethylene and ethyl acrylate, and a copolymer of ethylene and vinyl acetate is preferable, and the hot-melt adhesive containing at least one selected from a modified olefin-based resin or a modified polyester-based resin is more preferable. Of these, the hot-melt adhesive containing at least one selected from an acid-modified olefin-based resin or a modified polyester-based resin is still more preferable, the hot-melt adhesive containing at least one selected from an acid-modified olefin-based resin or an acid-modified polyester-based resin is particularly preferable, and the hot-melt adhesive containing an acid-modified olefin-based resin is most preferable.

The solvent-based adhesive is not particularly limited, and examples thereof include an adhesive that contains, as a main component (main ingredient), at least one of an epoxy-based resin, a phenolic resin, an olefin-based resin, a polyurethane-based resin, a vinyl-based resin (for example, a vinyl acetate-based resin and a polyvinyl alcohol-based resin), a synthetic rubber, or the like.

An average thickness of the adhesive layer is not particularly limited. However, the average thickness of the adhesive layer is preferably from 5 µm to 500 µm, more preferably from 20 µm to 150 µm, and still more preferably from 20 µm to 100 µm, from the viewpoints of riding comfort during traveling and durability of the tire.

The adhesive layer may contain other components other than the adhesive. Examples of other components include radical scavengers, rubber, elastomers, thermoplastic resins, various fillers (for example, silica, calcium carbonate, and clay), anti-aging agents, oils, plasticizers, colorants, and weather resistant agents.

### [Second Embodiment]

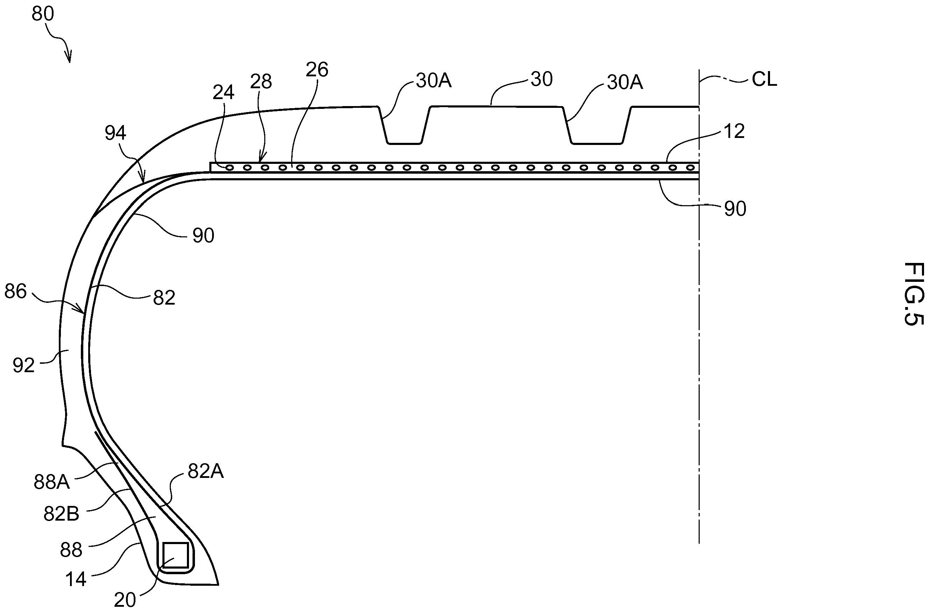

A structure of the tire according to the second embodiment will be described. Note that the second embodiment is an embodiment in which a tire frame member includes rubber and a reinforcing cord is present along the tire circumferential direction. Fig. 5 is a cross-sectional view taken along the tire width direction (i.e., perpendicular to the extension direction of the reinforcing cords), which illustrates a configuration of the tire according to the second embodiment. In Fig. 5, members that are the same as those in other drawings are denoted with the same reference symbols and the description thereof is omitted.

As shown in Fig. 5, a tire 80 according to the second embodiment includes: a tire case 94 as an example of the annular tire frame member including a rubber material containing rubber; a belt ply 12; and a tread 30 as an example of the rubber member.

The belt ply 12 and the tread 30 are the same as those in the first embodiment and the description thereof is omitted.

As shown in Fig. 5, the tire 80 of the present embodiment is, for example, a so-called radial tire, and includes a pair of bead portions 14 in which bead cores 20 are embedded. A carcass 86 formed of a single carcass ply 82 extends from one bead portion 14 to the other bead portion 14. Note that Fig. 5 shows a shape of the tire 80 in its natural state before air is filled in.

The carcass ply 82 is formed, for example, by coating a plurality of cords (not illustrated) extending in a radial direction of the pneumatic tire 80 with a coating rubber (not illustrated). Examples of material of the cord in the carcass ply 82 include PET. However, the material of the cord may be other conventionally known material.

An end portion of the carcass ply 82 in the tire width direction is folded back, at the bead core 20, to the outer side in the tire radial direction. A portion of the carcass ply 82 extending from one bead core 20 to the other bead core 20 is referred to as a main body 82A, and a portion of the carcass ply 82 folded back from the bead core 20 is referred to as a folded-back portion 82B.

A bead filler 88, a thickness of which gradually decreases from the bead core 20 toward the outer side in the tire radial direction, is disposed between the main body 82A and the folded-back portion 82B of the carcass ply 82. Note that, in the tire 80, a part of the bead filler 88 from an outside end 88A in the tire radial direction to the inside portion of the bead filler 88 in the tire radial direction corresponds to the bead portion 14.

An inner liner 90 formed of rubber is disposed at the tire inner side of the carcass 86, and a side rubber layer 92 formed of a rubber material containing rubber is disposed at an outer side of the carcass 86 in the tire width direction.

Note that, in the present embodiment, a tire case 94 is configured by the bead cores 20, the carcass 86, the bead fillers 88, the inner liner 90, and the side rubber layer 92.

The belt ply 12 is disposed at the outside of the crown portion of the carcass 86, in other words, at the outer side of the carcass 86 in the tire radial direction, and the belt ply 12 is tightly adhered to the outer circumferential surface of the carcass 86.

Then, the tread 30 formed of a rubber material containing rubber is disposed at the outer side of the belt ply 12 in the tire radial direction. As the rubber material used for the tread 30, a conventionally known rubber material is used. The groove 30A for water drainage is formed on the tread 30. As the pattern of the groove 30A in the tread 30, a conventionally known pattern is used.

### (Tire Production Method)

Next, an example of a method of producing the tire 80 of the present embodiment will be described.

First, an unvulcanized tire case 94 is formed on the outer circumference of a known tire molding drum (not illustrated), the unvulcanized tire case 94 including the inner liner 90 formed of the rubber material, the bead cores 20, the bead fillers 88 formed of the rubber material, the carcass ply 82 in which the cords are coated with the rubber material, and the side rubber layer 92.

The belt ply 12 is formed as follows.

Specifically, the resin-coated cord 28 is sent out toward the outer circumferential surface of a belt molding drum (not illustrated). The resin-coated cord 28 is pressed to the outer circumferential surface of the belt molding drum while being heated and melted by hot air, and then cooled. Examples of each of the heating method and the cooling method include the same method as that in the first embodiment. In this manner, the resin-coated cord 28 is helically wound around the outer circumferential surface of the belt molding drum while being pressed to the outer circumferential surface of the belt molding drum, thereby forming a layer of the resin-coated cord 28 on the outer circumferential surface of the belt molding drum.

Then, the groove 32 is formed on the outer circumferential surface of the layer of the resin-coated cord 28, thereby obtaining the belt ply 12. Note that, similar to the first embodiment, the step of forming the groove 32 on the belt ply 12 may be performed before the resin-coated cord 28 is wound around the outer circumferential surface of the belt molding drum. Further, as described later, the belt ply 12 having the groove 32 may be obtained by disposing the layer of the resin-coated cord 28, in which the groove 32 has not been formed, on the tire case 94 and then forming the groove 32.

Next, the belt ply 12, in which the resin-coated cord 28 is cooled and the coating resin 26 is solidified and the groove 32 is formed, is removed from the belt molding drum. Then, the belt ply 12 thus removed is disposed at the outer side of the unvulcanized tire case 94 installed in the tire molding drum in the radial direction. Subsequently, the tire case 94 is expanded such that the outer circumferential surface of the tire case 94, in other words, the outer circumferential surface of the carcass 86, is pressed to be adhered to the inner circumferential surface of the belt ply 12.

Finally, the unvulcanized tread is affixed to the outer circumferential surface of the belt ply 12, to complete the production of a raw tire.

The raw tire thus produced is vulcanized and molded in a vulcanization molding mold to complete the production of the tire 80.

Note that examples of the embodiments of the present invention have been explained; however, the present invention is not limited to these embodiments and other various embodiments are possible as long as they are within the scope of the present invention.

Further, it is possible to appropriately combine the first embodiment and the second embodiment.

Note that the tire according to one embodiment of the present invention includes the following aspect.
<1> A tire, including:
   an annular tire frame member;
   a belt ply disposed at an outer side of the tire frame member in a tire radial direction, the belt ply including a plurality of reinforcing cords and a coating resin that coats the reinforcing cords, and the belt ply having, at an outer surface of the belt ply in the tire radial direction, a groove along an extension direction of the reinforcing cords; and
   a rubber member disposed at the outer surface of the belt ply in the tire radial direction.
<2> The tire according to <1>, in which a depth of the groove is equal to or smaller than a depth from the outer surface of the belt ply in the tire radial direction to a center portion of the reinforcing cords in the tire radial direction.
<3> The tire according to <1> or <2>, in which a width of an opening portion of the groove is larger than a width of a groove bottom of the groove.
<4> The tire according to any one of <1> to <3>, in which, in a cross section perpendicular to the extension direction of the reinforcing cords, the groove is present at a portion of the outer surface of the belt ply in the tire radial direction corresponding to a portion between the plurality of reinforcing cords.
<5> The tire according to any one of <1> to <4>, in which the groove bottom of the groove has no corner in a cross section perpendicular to the extension direction of the reinforcing cords.
<6> The tire according to any one of <1> to <5>, in which the reinforcing cords are present along a tire circumferential direction.
<7> The tire according to any one of <1> to <6>, in which the tire frame member includes a resin.

The disclosure of Japanese Patent Application No. 2017-002860, filed on January 11, 2017, is incorporated herein by reference in its entirety.

All publications, patent applications, and technical standards described in this specification are herein incorporated by reference to the same extent as if each individual publication, patent application, or technical standard was specifically and individually indicated to be incorporated by reference.

## Claims

1. A tire, comprising:
an annular tire frame member;
a belt ply disposed at an outer side of the tire frame member in a tire radial direction, the belt ply including a plurality of reinforcing cords and a coating resin that coats the reinforcing cords, and the belt ply having, at an outer surface of the belt ply in the tire radial direction, a groove along an extension direction of the reinforcing cords; and
a rubber member disposed at the outer surface of the belt ply in the tire radial direction.

2. The tire according to claim 1, wherein a depth of the groove is equal to or smaller than a depth from the outer surface of the belt ply in the tire radial direction to a center portion of the reinforcing cords in the tire radial direction.

3. The tire according to claim 1 or 2, wherein a width of an opening portion of the groove is larger than a width of a groove bottom of the groove.

4. The tire according to any one of claims 1 to 3, wherein, in a cross section perpendicular to the extension direction of the reinforcing cords, the groove is present at a portion of the outer surface of the belt ply in the tire radial direction corresponding to a portion between the plurality of reinforcing cords.

5. The tire according to any one of claims 1 to 4, wherein the groove bottom of the groove has no corner in a cross section perpendicular to the extension direction of the reinforcing cords.

6. The tire according to any one of claims 1 to 5, wherein the reinforcing cords are present along a tire circumferential direction.

7. The tire according to any one of claims 1 to 6, wherein the tire frame member includes a resin.
